# EUROPEAN PATENT SPECIFICATION

(11) **EP 4 042 387 B1**
(45) Date of publication and mention of the grant of the patent: **06.08.2025**
(21) Application number: 20789911.3
(22) Date of filing: 07.10.2020
(51) Int. Cl.: G07C 9/00

(54) **INSIDE OR OUTSIDE A METAL DOOR**
INNERHALB ODER AUSSERHALB EINER METALLTÜR
À L'INTÉRIEUR OU À L'EXTÉRIEUR D'UNE PORTE MÉTALLIQUE

(30) Priority: 08.10.2019 SE 1951143
(43) Date of publication of application: 17.08.2022
(73) Proprietor: ASSA ABLOY AB, 107 23 Stockholm (SE)
(72) Inventor: EINBERG, Fredrik, 144 41 Huddinge (SE); CEDERBLAD, Mats, 193 35 Sigtuna (SE); HAEGER, Mattias, 169 73 Solna (SE)
(74) Representative: Kransell & Wennborg KB
(86) International application number: PCT/EP2020/078051
(87) International publication number: WO 2021/069468

(56) References cited:
- EP-A1- 3 349 192
- DE-A1- 102018 102 405
- US-A1- 2013 241 694
- US-A1- 2018 081 025
- US-A1- 2018 213 355

## Description

### TECHNICAL FIELD

The present disclosure relates to the field of location determination of a portable key device and in particular to determining whether a portable key device is located inside or outside a metal door.

### BACKGROUND

Lock devices and key devices are evolving from the traditional pure mechanical locks. These days, there are wireless interfaces for electronic lock devices, e.g. by interacting with a portable key device. For instance, Radio Frequency Identification (RFID) has been used as the wireless interface. When RFID is used, the user needs to present the portable key device very close to a reader of the lock.

In order to provide a more user-friendly solution, wireless interfaces, such as Bluetooth Low Energy, BLE, with greater range are starting to be used. This allows the interaction between the portable key device and the lock device to occur without user interaction, e.g. with a portable key device being located in a pocket or handbag. However, in such a situation, there is a risk that someone on the inside unlocks the lock device by simply walking by the lock device. In order to prevent this from happening, without introducing user interaction to open the lock device, there needs to be a way to block portable key devices on the inside from unlocking the lock device.

One way to achieve this is to determine where the portable key device is located, i.e. inside or outside a barrier. In this way, automatic access control could be disabled for inside devices, preventing inadvertent unlocking. Prior art lock and key devices are known by US2018/213355 A1 and DE102018102405 A1.

### SUMMARY

One objective is to improve how it is determined when a portable key device is located on the inside or outside of a barrier.

The objective is solved by a method according to claim 1.

The method may further comprise the step of: determining the portable key device to be located on the inside of the metal door when the portable key device is not determined to be on the outside of the metal door.

The ToF measurements may be obtained using ultra-wideband, UWB, technology.

According to claim 4, it is provided a credential communication device for determining whether a portable key device is located inside or outside a metal door.

The credential communication device may further comprise instructions that, when executed by the processor, cause the credential communication device to determine the portable key device to be located on the inside of the metal door when the portable key device is not determined to be on the outside of the metal door.

The ToF measurements may be obtained using ultra-wideband, UWB, technology.

According to claim 7, it is provided an access control system comprising: the credential communication device according to claim 4; and a metal door, wherein the metal door is provided between the first antenna and the second antenna of the access communication device.

The metal door may be configured to be connected to ground.

According to claim 9, it is provided a computer program for determining whether a portable key device is located inside or outside a metal door.

According to claim 10, it is provided a computer program product comprising a computer program according to claim 9 and a computer readable means on which the computer program is stored.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Fig 1 is a schematic diagram showing an environment in which embodiments presented herein can be applied;
Figs 2A-B are schematic top views of the environment of Fig 1, where also antennas are visible according to two embodiments;
Fig 3 is a flow chart illustrating embodiments of methods for determining whether a portable key device is located inside or outside a metal door;
Fig 4 is a schematic diagram illustrating components of the credential communication device of Figs 1 and 2; and
Fig 5 shows one example of a computer program product 90 comprising computer readable means.

### DETAILED DESCRIPTION

The aspects of the present disclosure will now be described more fully hereinafter with reference to the accompanying drawings, in which certain embodiments of the invention are shown. These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

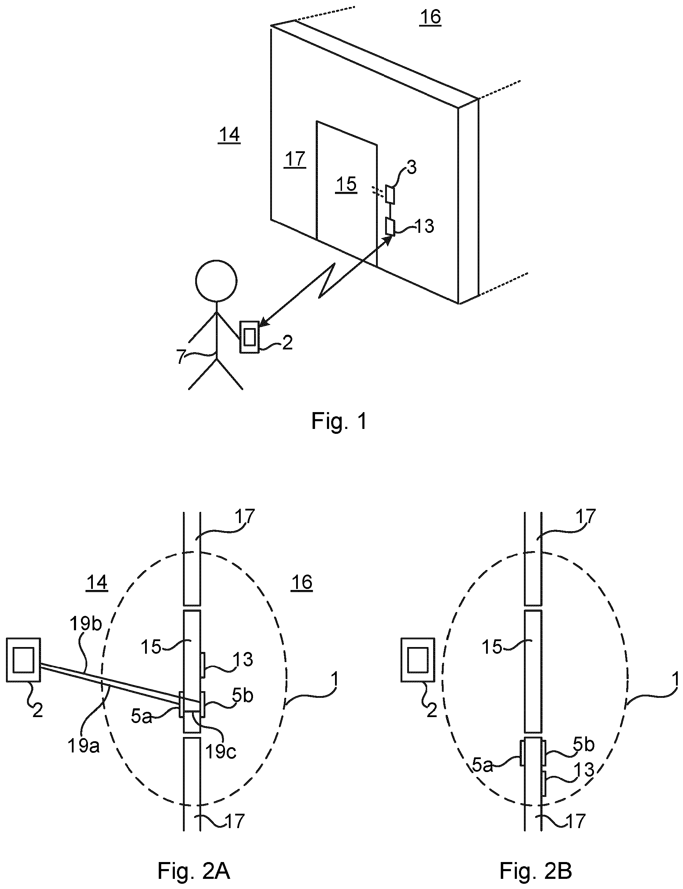

Fig 1 is a schematic diagram showing an environment in which embodiments presented herein can be applied.

Access to a physical space 16 is restricted by an openable barrier 15 which is selectively unlockable. In this case, the openable barrier is in the form of a metal door. In order to unlock the barrier 15, a credential communication device 13 is provided. The credential communication device 13 is connected to a physical lock device 3, which is controllable by the credential communication device 13 to be set in an unlocked state or locked state. In this embodiment, the credential communication device 13 is mounted close to the physical lock device 3.

The credential communication device 13 communicates with a portable key device 2 over a wireless interface using a plurality of antennas (shown in Figs 2A-B). The portable key device 2 is any suitable device portable by a user and which can be used for authentication over the wireless interface. The portable key device 2 is typically carried or worn by the user and may be implemented as a mobile phone, a smartphone, a key fob, wearable device, smart phone case, RFID (Radio Frequency Identification) card, etc. Using wireless communication, the authenticity and authority of the portable key device can be checked in an unlock procedure, e.g. using a challenge and response scheme, after which the credential communication device 13 grants or denies access. As described in more detail below, the antennas are also used to determine when the portable key device 2 is on the inside 16 or outside of the metal door 15, based on Time-of-Flight (ToF) measurements.

Providing multiple antennas provides additional benefits. For instance, the antennas can be used for beam forming, multiple input/multiple output (MIMO) transmissions, redundancy between antennas, differential antennas, etc.

When access is granted, the credential communication device 13 sends an unlock signal to the lock device 3, whereby the lock device 3 is set in an unlocked state. In this embodiment, this can e.g. imply a signal over a wire-based communication, e.g. using a serial interface (e.g. RS485, RS232), Universal Serial Bus (USB), Ethernet, or even a simple electric connection (e.g. to the lock device 3), or alternatively a wireless interface. When the lock device 3 is in an unlocked state, the metal door 15 can be opened and when the lock device 3 is in a locked state, the metal door 15 cannot be opened. In this way, access to a closed space 16 is controlled by the credential communication device 13. It is to be noted that the credential communication device 13 and/or the lock device 3 can be mounted in a fixed structure (e.g. wall, frame, etc.) by the metal door 15 (as shown) or in the metal door 15 (not shown).

Figs 2A-B are schematic top views of the environment of Fig 1, where also antennas are visible according to two embodiments. Specifically, there is a first antenna 5a on the outside 14 of the metal door 15 and a second antenna 5b on the inside 16 of the metal door 15. The antennas 5a-b are connected to the credential communication device 13.

First, the embodiment of Fig 2A will be described. Here, the two antennas 5a, 5b are provided attached to the metal door 15, on either side.

When a portable key device 2 is in the vicinity, the credential communication device 13 will determine whether the device is on the inside or outside of the metal door. This determination is based on Time-of-Flight (ToF). ToF, known in the art per se, uses timing of radio signals to determine distance between two devices. One technology where ToF is used for positioning is Ultra-Wideband (UWB), which can be employed in embodiments presented herein. In ToF, it is determined the time a signal takes to travel between two points. This time is converted to distance using the speed of light.

In this way, a first distance 19a being the distance between the first antenna 5a and the portable key device 2 can be determined using ToF. Additionally, a second distance 19b can be determined using ToF.

The components between the antennas 5a-b comprises an RF barrier that delays, fades, blocks or otherwise negatively affects radio signals. The RF barrier is in the form of a metal section of the metal door. In other words, since, the barrier 15 is a metal door, the metal section is integral to the barrier. The presence of metal skews ToF measurements and makes measurements such as angle-of-arrival practically impossible since these depend on very exact time difference measurements. Hence, in the prior art, metal materials are avoided as much as possible when positioning using ToF. Optionally, the RF barrier also comprises RF absorbing material other than metal.

In contrast to the prior art, in the embodiments presented herein, the presence of the metal in the metal door is instead used to improve positioning. Specifically, the time to transfer signals between the portable key device 2 and the second antenna 5b is increased in the scenario of Fig 2A, e.g. due to the radio signal having to take a different path, such as via the openings between the metal door 15 and the surrounding structure 17. In this way, the determined distance based on ToF between the second antenna 5b and the portable key device 2 is greater than the actual distance, the second distance 19b. This is exploited to determine which side (inside 16 or outside 14) of the metal door 15 that the portable key device 2 is located.

When a ToF measurement between the first antenna 5a (on the outside) and the portable key device 2 is less than a ToF measurement between the second antenna 5b (on the inside) and the portable key device 2 by an amount which is greater than a ToF corresponding to a physical distance 19c between the antennas 5a-b, the portable key device 2 is determined to be on the outside. In other words, the ToF measurement from the first antenna 5a needs to be less than the ToF measurement from the second antenna 5b. Moreover, the difference between the ToF measurements needs to be greater than a threshold value. According to the invention, the threshold value is greater than a ToF corresponding to the actual distance 19c between the two antennas 5a, 5b. This is the case if the portable key device indeed is on the outside, since the RF barrier in the metal door 15 increases the time for the radio signals to travel between the second antenna 5b and the portable key device. Hence, the RF barrier in the metal door 15 increases the difference between the ToF measurements from the two antennas 5a-b, which thus provides a more reliable determination of when the portable key device 2 is on the outside 14. The threshold value can be increased depending on the ToF delay resulting from the RF barrier. The greater the threshold value, the less the risk is to incorrectly determine the portable key device to be on the outside. In other words, a more effective RF barrier generating a greater ToF delay allows a greater threshold value to be determined, which increases accuracy in determination of inside and, in particular, outside, of the portable key device 2.

Improving determination of when the portable key device 2 is on the outside improves security, since a false outside determination can result in inadvertent unlocking, e.g. if a person walks by the metal door 15 on the inside 16. In this case, an unauthorised person is able to pass through to the inside 16 through the unlocked metal door 15.

Optionally, the metal door is grounded to increase the negative effect on radio signals and thus to increase the difference in the ToF measurements.

Optionally, radiation-absorbent material is provided on a side of the second antenna 5b which does not face the metal door, i.e. towards the inside space. This also increases the difference and quality of the ToF measurements.

The credential communication device 13, the antennas 5a-b and the barrier 15 are here collectively called an access control system 1.

In Fig 2B, an embodiment is shown which is similar to that of Fig 2A, but where the antennas 5a-b are mounted on either side of the surrounding structure 17 and either side of the metal door 15. Again, there is material between the two antennas 5a-b which has negative effect on radio signals, exploited in analogy to the description above. The surrounding structure 17 can e.g. comprise concrete.

In Figs 2A-B, two antennas 5a-b can be seen. However, there may be more antennas provided as desired as long as there is at least one antenna provided on either side of the metal door 15.

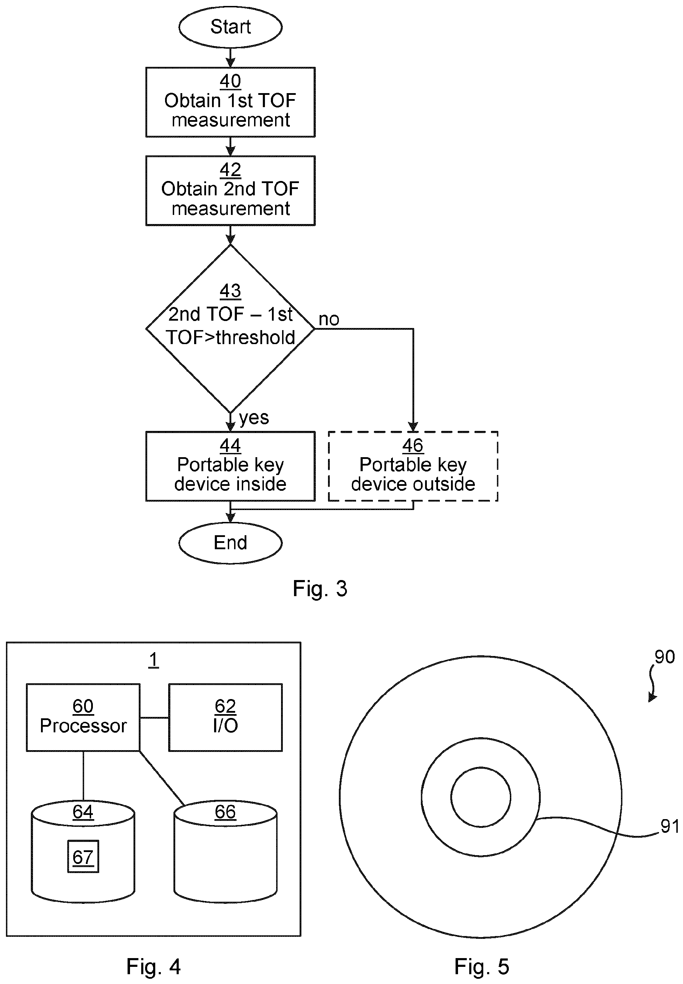

Fig 3 is a flow chart illustrating embodiments of methods for determining whether a portable key device is located inside or outside a metal . The methods are performed in the credential communication device.

In an *obtain 1^{st} ToF measurement* step 40, the credential communication device obtains a first ToF measurement between a first antenna and the portable key device. The first antenna is located on the outside of the metal door.

In an *obtain 2^{nd} ToF measurement* step 42, the credential communication device obtains a second ToF measurement between a second antenna and the portable key device. The second antenna is located on the inside of the metal door.

As explained above, both ToF measurements can be obtained using UWB technology.

In a conditional *2^{nd} ToF - 1^{st} ToF > threshold* step 43, the credential communication device determines when a condition is true that the first ToF measurement is less than the second ToF measurement by an amount which is greater than a threshold amount. The threshold amount is a ToF value corresponding to a physical distance between the first antenna and the second antenna. The ToF measurements can be expressed as times or distances, as long as the comparison is made using the same physical quantity. If this condition is true, the method proceeds to *a portable key device inside* step 44. Otherwise, the method optionally proceeds to an optional *portable key device outside* step 46 or the method ends.

In the *portable key device inside* step 44, the credential communication device determines the portable key device to be located on the outside of the metal door.

In the optional *portable key device outside* step 46, the credential communication device determines the portable key device to be located on the inside of the metal door when the portable key device is not determined to be on the outside of the metal door.

Fig 4 is a schematic diagram illustrating components of the credential communication device 13 of Figs 1 and 2. A processor 60 is provided using any combination of one or more of a suitable central processing unit (CPU), multiprocessor, microcontroller, digital signal processor (DSP), etc., capable of executing software instructions 67 stored in a memory 64, which can thus be a computer program product. The processor 60 could alternatively be implemented using an application specific integrated circuit (ASIC), field programmable gate array (FPGA), etc. The processor 60 can be configured to execute the method described with reference to Fig 3 above.

The memory 64 can be any combination of random-access memory (RAM) and/or read-only memory (ROM). The memory 64 also comprises persistent storage, which, for example, can be any single one or combination of magnetic memory, optical memory, solid-state memory or even remotely mounted memory.

A data memory 66 is also provided for reading and/or storing data during execution of software instructions in the processor 60. The data memory 66 can be any combination of RAM and/or ROM.

The credential communication device 13 further comprises an I/O interface 62 for communicating with external and/or internal entities. Optionally, the I/O interface 62 also includes a user interface.

Other components of the credential communication device 13 are omitted in order not to obscure the concepts presented herein.

Fig 5 shows one example of a computer program product 90 comprising computer readable means. On this computer readable means, a computer program 91 can be stored, which computer program can cause a processor to execute a method according to embodiments described herein. In this example, the computer program product is an optical disc, such as a CD (compact disc) or a DVD (digital versatile disc) or a Blu-Ray disc. As explained above, the computer program product could also be embodied in a memory of a device, such as the computer program product 64 of Fig 4. While the computer program 91 is here schematically shown as a track on the depicted optical disk, the computer program can be stored in any way which is suitable for the computer program product, such as a removable solid-state memory, e.g. a Universal Serial Bus (USB) drive.

## Claims

1. A method for determining whether a portable key device (2) is located inside or outside a metal door (15), the method being performed by a credential communication device (13) and comprising the steps of:
obtaining (40) a first time-of-flight, ToF, measurement between a first antenna (5a) and the portable key device (2), wherein the first antenna (5a) is located on the outside of the metal door (15);
obtaining (42) a second ToF measurement between a second antenna (5b) and the portable key device (2), wherein the second antenna (5a) is located on the inside of the metal door (15); and
determining (44) the portable key device (2) to be located on the outside of the metal door (15) when the first ToF measurement is less than the second ToF measurement by an amount which is greater than a threshold value, **characterized in that** the threshold is greater than a ToF corresponding to a physical distance between the first antenna and the second antenna.

2. The method according to claim 1, further comprising the step of:
determining (46) the portable key device (2) to be located on the inside of the metal door (15) when the portable key device (2) is not determined to be on the outside of the metal door (15).

3. The method according to any one of the preceding claims, wherein the ToF measurements are obtained using ultra-wideband, UWB, technology.

4. A credential communication device (13) for determining whether a portable key device (2) is located inside or outside a metal door (15), the credential communication device (13) comprising:
a processor (60); and
a memory (64) storing instructions (67) that, when executed by the processor, cause the credential communication device to:
obtain a first time-of-flight, ToF, measurement between a first antenna (5a) and the portable key device (2), wherein the first antenna (5a) is locatable on the outside of the metal door (15);
obtain a second ToF measurement between a second antenna (5b) and the portable key device (2), wherein the second antenna (5a) is locatable on the inside of the metal door (15); and
determine the portable key device (2) to be located on the outside of the metal door (15) when the first ToF measurement is less than the second ToF measurement by an amount which is greater than a threshold value, **characterized in that** the threshold is greater than a ToF corresponding to a physical distance between the first antenna and the second antenna.

5. The credential communication device according to claim 4, further comprising instructions (67) that, when executed by the processor, cause the credential communication device to determine the portable key device (2) to be located on the inside of the metal door (15) when the portable key device (2) is not determined to be on the outside of the metal door (15).

6. The credential communication device according to any one of claims 4 to 5, wherein the ToF measurements are obtained using ultra-wideband, UWB, technology.

7. An access control system (1) comprising:
the credential communication device (13) according to any one of the claims 4 to 6; and
a metal door (15), wherein the metal door (15) is provided between the first antenna (5a) and the second antenna (5b) of the access communication device (13).

8. The access control system (1) according to claim 7, wherein the metal door (15) is configured to be connected to ground.

9. A computer program (67, 91) for determining whether a portable key device (2) is located inside or outside a metal door (15), the computer program comprising computer program code which, when run on a credential communication device (13) causes the credential communication device (13) to:
obtain a first time-of-flight, ToF, measurement between a first antenna (5a) and the portable key device (2), wherein the first antenna (5a) is located on the outside of the metal door (15);
obtain a second ToF measurement between a second antenna (5b) and the portable key device (2), wherein the second antenna (5a) is located on the inside of the metal door (15); and
determine the portable key device (2) to be located on the outside of the metal door (15) when the first ToF measurement is less than the second ToF measurement by an amount which is greater than a threshold value, **characterized in that** the threshold is greater than a ToF corresponding to a physical distance between the first antenna and the second antenna.

10. A computer program product (64, 90) comprising a computer program according to claim 9 and a computer readable means on which the computer program is stored.

## Patentansprüche

1. Verfahren zum Bestimmen, ob sich eine tragbare Schlüsselvorrichtung (2) innerhalb oder außerhalb einer Metalltür (15) befindet, wobei das Verfahren durch eine Berechtigungsnachweis-Kommunikationsvorrichtung (13) ausgeführt wird und die Schritte umfasst zum:
Erhalten (40) einer ersten Laufzeit-, ToF-Messung zwischen einer ersten Antenne (5a) und der tragbaren Schlüsselvorrichtung (2), wobei sich die erste Antenne (5a) an der Außenseite der Metalltür (15) befindet;
Erhalten (42) einer zweiten ToF-Messung zwischen einer zweiten Antenne (5b) und der tragbaren Schlüsselvorrichtung (2), wobei sich die zweite Antenne (5a) an der Innenseite der Metalltür (15) befindet; und
Bestimmen (44), dass sich die tragbare Schlüsselvorrichtung (2) an der Außenseite der Metalltür (15) befindet, wenn die erste ToF-Messung um einen Betrag, die größer ist als ein Schwellenwert, kleiner als die zweite ToF-Messung ist, **dadurch gekennzeichnet, dass** der Schwellenwert größer als eine ToF ist, die einer physischen Entfernung zwischen der ersten Antenne und der zweiten Antenne entspricht.

2. Verfahren nach Anspruch 1, das weiter den Schritt umfasst zum:
Bestimmen (46), dass sich die tragbare Schlüsselvorrichtung (2) an der Innenseite der Metalltür (15) befindet, wenn nicht bestimmt wird, dass sich die tragbare Schlüsselvorrichtung (2) an der Außenseite der Metalltür (15) befindet.

3. Verfahren nach einem der vorstehenden Ansprüche, wobei die ToF-Messungen unter Verwendung der Ultrabreitband-, UWB-Technologie erhalten werden.

4. Berechtigungsnachweis-Kommunikationsvorrichtung (13) zum Bestimmen, ob sich eine tragbare Schlüsselvorrichtung (2) innerhalb oder außerhalb einer Metalltür (15) befindet, wobei die Berechtigungsnachweis-Kommunikationsvorrichtung (13) umfasst:
einen Prozessor (60); und
einen Speicher (64), der Anweisungen (67) speichert, die, wenn sie von dem Prozessor ausgeführt werden, die Berechtigungsnachweis-Kommunikationsvorrichtung veranlassen:
eine erste Laufzeit, ToF-Messung zwischen einer ersten Antenne (5a) und der tragbaren Schlüsselvorrichtung (2) zu erhalten, wobei die erste Antenne (5a) an der Außenseite der Metalltür (15) lokalisierbar ist;
eine zweite ToF-Messung zwischen einer zweiten Antenne (5b) und der tragbaren Schlüsselvorrichtung (2) zu erhalten, wobei die zweite Antenne (5a) an der Innenseite der Metalltür (15) lokalisierbar ist; und
zu bestimmen, dass sich die tragbare Schlüsselvorrichtung (2) an der Außenseite der Metalltür (15) befindet, wenn die erste ToF-Messung um einen Betrag, die größer ist als ein Schwellenwert, kleiner als die zweite ToF-Messung ist, **dadurch gekennzeichnet, dass** der Schwellenwert größer als eine ToF ist, die einer physischen Entfernung zwischen der ersten Antenne und der zweiten Antenne entspricht.

5. Berechtigungsnachweis-Kommunikationsvorrichtung nach Anspruch 4, die weiter Anweisungen (67) umfasst, die, wenn sie vom Prozessor ausgeführt werden, die Berechtigungsnachweis-Kommunikationsvorrichtung veranlassen zu bestimmen, dass sich die tragbare Schlüsselvorrichtung (2) an der Innenseite der Metalltür (15) befindet, wenn nicht bestimmt wird, dass sich die tragbare Schlüsselvorrichtung (2) an der Außenseite der Metalltür (15) befindet.

6. Berechtigungsnachweis-Kommunikationsvorrichtung nach einem der Ansprüche 4 bis 5, wobei die ToF-Messungen unter Verwendung der Ultrabreitband-, UWB-Technologie erhalten werden.

7. Zugangssteuersystem (1), umfassend:
das Berechtigungsnachweis-Kommunikationsvorrichtung (13) nach einem der Ansprüche 4 bis 6; und
eine Metalltür (15), wobei die Metalltür (15) zwischen der ersten Antenne (5a) und der zweiten Antenne (5b) der Berechtigungsnachweis-Kommunikationsvorrichtung (13) bereitgestellt ist.

8. Zugangssteuersystem (1) nach Anspruch 7, wobei die Metalltür (15) konfiguriert ist, um mit Masse verbunden zu sein.

9. Computerprogramm (67, 91) zum Bestimmen, ob sich eine tragbare Schlüsselvorrichtung (2) innerhalb oder außerhalb einer Metalltür (15) befindet, wobei das Computerprogramm einen Computerprogrammcode umfasst, der, wenn er auf einer Berechtigungsnachweis-Kommunikationsvorrichtung (13) läuft, die Berechtigungsnachweis-Kommunikationsvorrichtung (13) veranlasst:
eine erste Laufzeit, ToF-Messung zwischen einer ersten Antenne (5a) und der tragbaren Schlüsselvorrichtung (2) zu erhalten, wobei sich die erste Antenne (5a) an der Außenseite der Metalltür (15) befindet;
eine zweite ToF-Messung zwischen einer zweiten Antenne (5b) und der tragbaren Schlüsselvorrichtung (2) zu erhalten, wobei sich die zweite Antenne (5a) an der Innenseite der Metalltür (15) befindet; und
zu bestimmen, dass sich die tragbare Schlüsselvorrichtung (2) an der Außenseite der Metalltür (15) befindet, wenn die erste ToF-Messung um einen Betrag, die größer ist als ein Schwellenwert, kleiner als die zweite ToF-Messung ist, **dadurch gekennzeichnet, dass** der Schwellenwert größer als eine ToF ist, die einer physischen Entfernung zwischen der ersten Antenne und der zweiten Antenne entspricht.

10. Computerprogrammprodukt (64, 90), das ein Computerprogramm nach Anspruch 9 und ein computerlesbares Mittel, auf dem das Computerprogramm gespeichert ist, umfasst.

## Revendications

1. Procédé pour déterminer si un dispositif de clé portable (2) est situé à l'intérieur ou à l'extérieur d'une porte métallique (15), le procédé étant exécuté par un dispositif de communication de justificatif d'identité (13) et comprenant les étapes consistant à :
obtenir (40) une première mesure de temps de vol, ToF, entre une première antenne (5a) et le dispositif de clé portable (2), dans lequel la première antenne (5a) est située à l'extérieur de la porte métallique (15) ;
obtenir (42) une seconde mesure de ToF entre une seconde antenne (5b) et le dispositif de clé portable (2), dans lequel la seconde antenne (5a) est située à l'intérieur de la porte métallique (15) ; et
déterminer (44) que le dispositif de clé portable (2) est situé à l'extérieur de la porte métallique (15) lorsque la première mesure de ToF est inférieure à la seconde mesure de ToF d'une quantité qui est supérieure à une valeur de seuil, **caractérisé en ce que** le seuil est supérieur à un ToF correspondant à une distance physique entre la première antenne et la seconde antenne.

2. Procédé selon la revendication 1, comprenant en outre l'étape consistant à :
déterminer (46) que le dispositif de clé portable (2) est situé à l'intérieur de la porte métallique (15) lorsqu'il est déterminé que le dispositif de clé portable (2) se trouve à l'extérieur de la porte métallique (15).

3. Procédé selon l'une quelconque des revendications précédentes, dans lequel les mesures de ToF sont obtenues à l'aide d'une technologie à bande ultra large, UWB.

4. Dispositif de communication de justificatif d'identité (13) pour déterminer si un dispositif de clé portable (2) est situé à l'intérieur ou à l'extérieur d'une porte métallique (15), le dispositif de communication de justificatif d'identité (13) comprenant :
un processeur (60) ; et
une mémoire (64) stockant des instructions (67) qui, lorsqu'elles sont exécutées par le processeur, amènent le dispositif de communication de justificatif d'identité à :
obtenir une première mesure de temps de vol, ToF, entre une première antenne (5a) et le dispositif de clé portable (2), dans lequel la première antenne (5a) peut être située à l'extérieur de la porte métallique (15) ;
obtenir (42) une seconde mesure de ToF entre une seconde antenne (5b) et le dispositif de clé portable (2), dans lequel la seconde antenne (5a) peut être située à l'intérieur de la porte métallique (15) ; et
déterminer que le dispositif de clé portable (2) doit être situé à l'extérieur de la porte métallique (15) lorsque la première mesure de ToF est inférieure à la seconde mesure de ToF d'une quantité qui est supérieure à une valeur seuil, **caractérisé en ce que** le seuil est supérieur à un ToF correspondant à une distance physique entre la première antenne et la seconde antenne.

5. Dispositif de communication de justificatif d'identité selon la revendication 4, comprenant en outre des instructions (67) qui, lorsqu'elles sont exécutées par le processeur, amènent le dispositif de communication de justificatif d'identité à déterminer que le dispositif de clé portable (2) est situé à l'intérieur de la porte métallique (15) lorsqu'il est déterminé que le dispositif de clé portable (2) est à l'extérieur de la porte métallique (15).

6. Dispositif de communication de justificatif d'identité selon l'une quelconque des revendications 4 à 5, dans lequel les mesures de ToF sont obtenues à l'aide d'une technologie à bande ultra large, UWB.

7. Système de commande d'accès (1), comprenant :
le dispositif de communication de justificatif d'identité (13) selon l'une quelconque des revendications 4 à 6 ; et
une porte métallique (15), dans lequel la porte métallique (15) est disposée entre la première antenne (5a) et la seconde antenne (5b) du dispositif de communication d'accès (13).

8. Système de commande d'accès (1) selon la revendication 7, dans lequel la porte métallique (15) est configurée pour être raccordée à la terre.

9. Programme informatique (67, 91) pour déterminer si un dispositif de clé portable (2) est situé à l'intérieur ou à l'extérieur d'une porte métallique (15), le programme informatique comprenant un code de programme informatique qui, lorsqu'il est exécuté sur un dispositif de communication de justificatif d'identité (13), amène le dispositif de communication de justificatif d'identité (13) à :
obtenir une première mesure de temps de vol, ToF, entre une première antenne (5a) et le dispositif de clé portable (2), dans lequel la première antenne (5a) est située à l'extérieur de la porte métallique (15) ;
obtenir une seconde mesure de ToF entre une seconde antenne (5b) et le dispositif de clé portable (2), dans lequel la seconde antenne (5a) est située à l'intérieur de la porte métallique (15) ; et
déterminer que le dispositif de clé portable (2) est situé à l'extérieur de la porte métallique (15) lorsque la première mesure de ToF est inférieure à la seconde mesure de ToF d'une quantité qui est supérieure à une valeur de seuil, **caractérisé en ce que** le seuil est supérieur à un ToF correspondant à une distance physique entre la première antenne et la seconde antenne.

10. Produit de programme informatique (64, 90) comprenant un programme informatique selon la revendication 9 et un moyen lisible par ordinateur sur lequel le programme informatique est stocké.
